# EUROPEAN PATENT APPLICATION

(11) **EP 3 907 641 A1**
(43) Date of publication of application: **10.11.2021**
(21) Application number: 19908290.0
(22) Date of filing: 01.02.2019
(51) Int. Cl.: G06F 21/62

(54) **INTELLIGENT MANAGEMENT METHOD AND SYSTEM BASED ON EDGE COMPUTING**

(30) Priority: 09.01.2019 CN 201910021104
(71) Applicant: Wangsu Science & Technology Co., Ltd., Shanghai 200030 (CN)
(72) Inventor: LIU, Yongchao, Shanghai 200030 (CN); ZOU, Huanying, Shanghai 200030 (CN)
(74) Representative: De Arpe Tejero, Manuel
(86) International application number: PCT/CN2019/074462
(87) International publication number: WO 2020/143094

(57) **Abstract**

The present disclosure discloses an intelligent management method and system based on edge computing, and belongs to the field of edge computing technology. By adopting the present disclosure, time required for data analysis and processing can be shortened and thus time delay is lower. Moreover, in case of network interruption and cloud downtime, it can ensure that edge computing not only can run local computing software offline in an internal network to implement local autonomy, but also can implement, through the offline running local edge computing group, interconnection and intercommunication between machine devices to construct a complete intelligent management network and system. Meanwhile, it can save bandwidth resources for data transmission when networking, and effectively alleviate the problems of data calculation and storage pressure, high traffic, difficulty in application development, and insufficient intelligence of an underlying machine device when using the cloud computing.

## Description

### TECHNICAL FIELD

The present disclosure relates to the field of edge computing technology, and more particularly, to an intelligent management method and system based on edge computing.

### BACKGROUND

With the continuous development of cloud computing technology, more and more enterprises have begun to apply the cloud computing technology into actual production, operation and management processes. An enterprise may connect machine devices to the network and perform central calculation on data generated by the machine devices through a cloud computing platform, such that the enterprise may achieve more efficient decision management through the calculation results.

Specifically, when the machine devices of the enterprise are running, original data locally generated may be periodically uploaded to the cloud computing platform through the Internet of Things (IoT). Then, the cloud computing platform may summarize and store the received original data, and perform centralized analysis and calculation. Further, the cloud computing platform may feed back the calculation results to the machine devices and a mobile management terminal of the enterprise, such that the machine devices can run automatically according to the calculation results, or the internal management of the enterprise is carried out manually through the mobile management terminal according to the calculation results.

In the process of implementing the present disclosure, the inventor found that there are at least the following problems in the prior art.

With the scale expansion of the enterprise, the number of IoT machine devices has increased rapidly. Correspondingly, the amount of data needing to be transmitted by the machine devices of the enterprise through the cloud has also increased sharply. If the original cloud computing platform is continuously used for computing and management, it will consume a large number of bandwidth resources to transmit the data generated by the machine devices, take more time to feed back the calculation results, and bring greater pressure on the cloud computing platform for data computing, and higher load and resource costs. Meanwhile, network interruption and cloud downtime will affect the operation of the machine devices, and thus causing losses to the enterprise. Furthermore, the data generated by the machine devices are completely uploaded to the cloud, and thus hazard to data security is greater when a cloud server is maliciously attacked.

### SUMMARY

To solve problems in the prior art, embodiments of the present disclosure provide an intelligent management method and system based on edge computing. The technical solutions are described as follows.

In a first aspect, there is provided an intelligent management method based on edge computing. The method is applied to an internal network management system, which at least includes a machine device and an edge computing software or device communicating with the machine device. The method includes:
obtaining, by the edge computing software or device, original data of the machine device;
analyzing, by the edge computing software or device, the original data based on a locally stored mathematical model or strategy to generate a data analysis result; and
feeding back, by the edge computing software or device, the data analysis result to a preset result receiving device, such that the result receiving device implements intelligent management based on the data analysis result.

Optionally, the method further includes:
performing, by the edge computing software or device, data cleaning on the original data, and performing data aggregation and compression on the cleaned original data;
uploading, by the edge computing software or device, the compressed original data to an edge computing platform, such that the edge computing platform creates and trains the mathematical model or strategy based on operation data; and
receiving and storing, by the edge computing software or device, the mathematical model or strategy fed back by the edge computing platform.

Optionally, the internal network management system also includes an internal network edge node deployed in an internal computer room.

The method also includes:
obtaining, by the internal network edge node, the original data uploaded by the edge computing software or device;
internally processing, by the internal network edge node, the original data to generate an internal processing result; and
feeding back, by the internal network edge node, the internal processing result to the preset result receiving device.

Optionally, the preset result receiving device is a machine device, a data center device, or an operation management device.

Optionally, the feeding back, by the edge computing software or device, the data analysis result to the preset result receiving device includes:
feeding back, by the edge computing software or device, the data analysis result to the machine device through an operation technology (OT) system by means of control instructions.

Optionally, after obtaining, by the edge computing software or device, original data of the machine device, the method also includes:
converting, by the edge computing software or device, original data under different protocols into original data under a designated protocol based on a preset protocol conversion rule.

Optionally, the method further includes:
obtaining, by the edge computing software or device, system operation data of an OT system and uploading the system operation data to an edge computing platform, such that the edge computing platform creates and trains an OT system decision model based on the system operation data; and
receiving, by the edge computing software or device, the OT system decision model fed back by the edge computing platform, and performing intelligent management on the OT system based on the OT system decision model.

In a second aspect, there is provided an intelligent management system based on edge computing, which at least includes a machine device and an edge computing software or device communicating with the machine device, wherein the edge computing software or device is configured to:
obtain original data of the machine device;
analyze the original data based on a locally stored mathematical model or strategy to generate a data analysis result; and
feed back the data analysis result to a preset result receiving device, such that the result receiving device implements intelligent management based on the data analysis result.

Optionally, the edge computing software or device is also configured to:
perform data cleaning on the original data and perform data aggregation and compression on the cleaned original data;
upload the compressed original data to an edge computing platform, such that the edge computing platform creates and trains the mathematical model or strategy based on operation data; and
receive and store the mathematical model or strategy fed back by the edge computing platform.

Optionally, the intelligent management system also includes an internal network edge node deployed in an internal computer room.

The internal network edge node is configured to:
obtain the original data uploaded by the edge computing software or device;
internally process the original data to generate an internal processing result; and
feed back the internal processing result to the preset result receiving device.

Optionally, the preset result receiving device is a machine device, a data center device, or an operation management device.

Optionally, the feeding back, by the edge computing software or device, the data analysis result to the preset result receiving device includes:
feeding back, by the edge computing software or device, the data analysis result to the machine device through an operation technology (OT) system by means of control instructions.

Optionally, the edge computing software or device is also configured to:
convert original data under different protocols into original data under a designated protocol based on a preset protocol conversion rule.

Optionally, the edge computing software or device is also configured to:
obtain system operation data of an OT system and upload the system operation data to an edge computing platform, such that the edge computing platform creates and trains an OT system decision model based on the system operation data; and
receive the OT system decision model fed back by the edge computing platform, and perform intelligent management on the OT system based on the OT system decision model.

Beneficial effects achieved by the technical solutions provided by the embodiments of the present disclosure are as follows.

In an embodiment of the present disclosure, the edge computing software or device is deployed near the underlying machine device, such that in one aspect, data analysis and processing may be closer to data source, and thus data can be processed more rapidly, delay time of data analysis and processing can be shortened, and a complete intelligent management system can be constructed directly in an internal network without connecting to an external network, and in another aspect, after being processed by the edge computing software or device, the amount of data required to be uploaded to the edge computing platform is greatly reduced, and thus bandwidth resources for data transmission are saved. Meanwhile, data are processed jointly by the edge computing software or device and the edge computing platform, which can fully utilize edge storage resources and computing resources, and thus reduce data computing pressure and data storage pressure on the edge computing platform. Furthermore, data with security requirements are directly processed by the internal network without being transmitted to the external network, which may improve data security of the data.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic structural diagram of an intelligent management system based on edge computing according to an embodiment of the present disclosure;
FIG. 2 is a flowchart of an intelligent management method based on edge computing according to an embodiment of the present disclosure; and
FIG. 3 is a schematic structural diagram of an intelligent management system based on edge computing according to another embodiment of the present disclosure.

### DETAILED DESCRIPTION

To make the objectives, technical solutions and advantages of the present disclosure clearer, the embodiments of the present disclosure are further described below in detail with reference to the accompanying drawings.

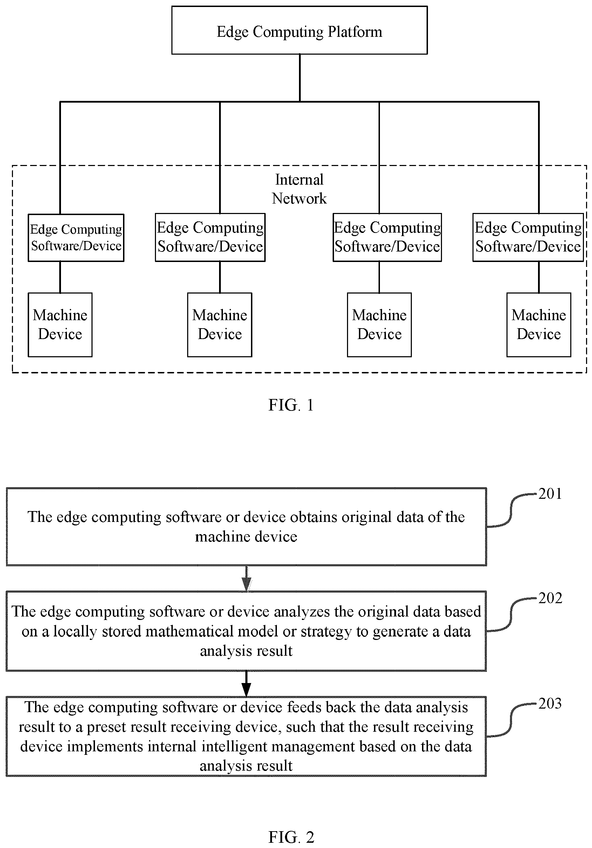

An embodiment of the present disclosure provides an intelligent management method based on edge computing. This method is applied to an intelligent management system. The intelligent management system may be a system for performing intelligent management on machine devices required for networking in enterprises, factories, buildings, transportations, and medical facilities, etc., based on the edge computing technology. As shown in FIG. 1, the intelligent management system at least includes a machine device and an edge computing software or device communicating with the machine device. The machine device may be any machine device required for networking through the cloud, for example, an industrial production machine, a robot, an intelligent device, a motor, an intelligent home, an instrument, a camera or a sensor, etc. The machine device may generate or collect original data under working conditions, and transmit the original data to the edge computing software or device. The edge computing software or device may be software or device that is pre-deployed in the internal network by an edge computing provider, and is physically close to the machine device. The edge computing software or device may summarize, compute, store, transmit and apply data generated or collected by the machine device through an edge computing service thereon. Specifically, the edge computing software or device may have capabilities such as artificial intelligence (AI) vision, augmented reality (AR)/virtual reality (VR) simulation, deep learning, and voiceprint recognition, etc., and support local processing on super definition images and super definition videos. A large number of edge computing software or devices may be deployed in the internal network, and each of the edge computing software or devices may be connected to one or more machine devices. The edge computing service may be a mathematical model or strategy trained by the edge computing platform, or a data analysis result, etc., or may also be a functional service of the edge computing software or device itself, such as data preprocessing, computing, storage, communication protocols, application, or security, etc.

Processing procedures as shown in FIG. 2 will be described in detail with reference to specific embodiments as follows.

In Step 201, the edge computing software or device obtains original data of the machine device.

The original data may be sensor instrument data, such as temperature, pressure, vibration, humidity and electrical parameters, etc., camera pictures, camera videos and audios, production data, quality data, operation data of the machine device, process parameters, or mac and ID addresses, etc.

In implementation, to implement networking and intelligentization of the underlying machine device, the edge computing provider may pre-deploy the edge computing software or device at the machine device side, and establish the communication between the edge computing software or device and the underlying machine device. Specifically, a connection between the edge computing software or device and the machine device may be implemented through wired communication technology such as Ethernet, Modbus, TCP/IP, or RS232/RS485/RS482 serial port technology, etc., or may be implemented through wireless communication technology such as iBeacon, Bluetooth, or ZigBee, etc. Taking a target enterprise as an example, when the machine device of the target enterprise is running, a pre-deployed edge computing software or device may continuously monitor the machine device and obtain original data and information of the machine device.

In Step 202, the edge computing software or device analyzes the original data based on a locally stored mathematical model or strategy to generate a data analysis result.

In implementation, after obtaining the original data of the machine device, the edge computing software or device may call the locally stored mathematical model or strategy to analyze the original data to generate the data analysis result. Specifically, an edge computing framework and container for computing local data may run on the edge computing software or device. The computing functions of the edge computing software or device may be provided by the edge computing framework and container. In this way, the specific processing to the analysis of the original data may be implemented through the edge computing framework and container. It is worth mentioning that one mathematical model or strategy can be used on a plurality of edge computing software or devices at the same time, and each of the edge computing software or devices may store a plurality of mathematical models or strategies.

In Step 203, the edge computing software or device feeds back the data analysis result to a preset result receiving device, such that the result receiving device implements internal intelligent management based on the data analysis result.

In implementation, after generating the data analysis result, the edge computing software or device may feed back the data analysis result to the preset result receiving device. In this way, after obtaining the data analysis result, the result receiving device may implement intelligent management based on the data analysis result. Of course, based on different data analysis results, intelligent management may also be carried out in scenarios such as management, development, engineering analysis, device research and development, device maintenance, and on-site diagnostic analysis, etc., so as to enhance management efficiency, increase speed of management decision and production capacity, improve service quality, and reduce operation costs. In addition, for an enterprise, based on the data analysis result generated by the edge computing software or device and through strategies such as intelligent decision support, and intelligent production scheduling, etc., it can improve energy utilization rate of the enterprise, reduce energy consumption, and rationally use resources.

Optionally, the edge computing software or device may also provide the original data to the edge computing platform, such that the edge computing platform can further optimize the mathematical model or strategy. The corresponding processing may be as follows. The edge computing software or device performs data cleaning on the original data and performs data aggregation and compression on the cleaned original data. Then, the edge computing software or device uploads the original data after aggregating and compressing to the edge computing platform, such that the edge computing platform creates and trains the mathematical model or strategy based on the original data of the machine device. Finally, the edge computing software or device receives and stores the mathematical model or strategy fed back by the edge computing platform.

The edge computing platform may be deployed on an external network, constructed by an edge computing server according to regions, and used to serve computing platforms of all enterprises, factories, buildings, transportations, or medical facilities in each of the regions. The edge computing platform may summarize original data uploaded by a large number of edge computing software or devices, and perform in-depth processing such as modeling, storing, and computing, etc. Specifically, the edge computing platform may be an edge node in a content delivery network (CDN) cluster.

In implementation, after obtaining the original data of the machine device, the edge computing software or device may first perform data cleaning on the original data to filter out repetitive and redundant original data (such as repetitive data of timestamp in a period, repetitive information of an owner, repetitive information of an MAC address, and so on), may supplement missing original data, and meanwhile may also correct or delete wrong original data. Then, the edge computing software or device may also aggregate the cleaned original data through the edge computing framework, container, or application, etc., and interact with a local data center to support the machine device to only upload necessary data and information to the cloud, such that a large amount of data may be used locally and internally to protect data security. Further, the edge computing software or device may compress the aggregated original data through the edge computing framework, container or application, and may store the compressed original data locally. In this way, the edge computing software or device may upload the processed original data to the edge computing platform without uploading all the original data to the edge computing platform, thereby reducing traffic consumption during data transmission.

After obtaining the original data uploaded by all of the edge computing software or devices, the edge computing platform may first store the original data in a local memory or a preset database. Then, the edge computing platform may perform big data analysis on the stored original data, such that it can create an intelligent mathematical model by means of machine learning, and further continuously train the created mathematical model or strategy based on the original data. Furthermore, the edge computing platform may feed back the trained mathematical model or strategy to the edge computing software or devices. After receiving the mathematical model or strategy, the edge computing software or devices may store the mathematical model or strategy to update the locally running mathematical model or strategy, so as to realize continuous optimization of the mathematical model or strategy.

Here, the edge computing software or device may communicate with the edge computing platform through a cloud communication technology, and the cloud communication technology may implement communications via local area network lines or Internet lines.

It is worth mentioning that the edge computing software or device may be mainly responsible for edge computing of a data source close to the machine device, responding to data analysis and processing with higher real-time requirements. For some analysis and processing (such as the above model training) that are more complex in calculation and require a large amount of data, the edge computing software or device may upload necessary data required for processing to the edge computing platform, such that the analysis and processing of the data are implemented by the edge computing platform.

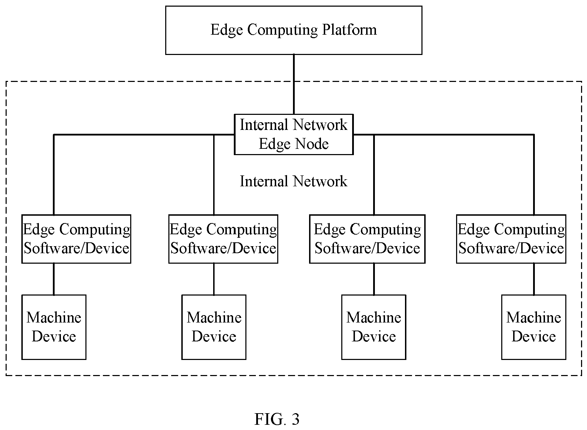

Optionally, as shown in FIG. 3, the intelligent management system also includes an internal network edge node deployed in an internal computer room. The edge computing software or device may transmit the obtained original data to the internal network edge node, so as to implement, by running the edge computing framework, container, application or private cloud through the internal network edge node, computing, storage, network or application of data reported by all internal networking machine devices to achieve data and information calculations with high performance, high concurrency, and large traffic. Correspondingly, after Step 201, there may be the following processing: the internal network edge node obtains the original data uploaded by the edge computing software or device; the internal network edge node internally processes the original data to generate internal processing result; and the internal network edge node feeds back the internal processing result to the preset result receiving device.

In implementation, the edge computing service provider may pre-deploy an internal network edge node in the internal computer room. The internal network edge node may be dedicated to providing internal data processing services. Through the internal network edge node, an internal local autonomous computing network may be established. The internal network edge node serves as a core of the autonomous computing network, and is responsible for interconnection and intercommunication between devices in the internal network. Therefore, after obtaining the original data, the edge computing software or device may upload the original data to the internal network edge node. The internal network edge node may obtain the original data, and process (which may be referred to as internal processing) the original data according to a preset data processing rule to generate the internal processing result. Then, the internal network edge node may feed back the internal processing result to the preset result receiving device. In this way, the intelligent management of internal devices may also be implemented only through the internal network. Meanwhile, for some data with higher security requirements, these data may be processed in the internal network without being transmitted via the external network, which effectively avoids data leakage during transmission via the external network and thus improves data security. It is worth mentioning that after internal processing of the original data, the internal network edge node may continue to upload the original data to the edge computing platform, such that the edge computing platform can perform subsequent processing based on the original data. Here, the edge computing software or device may communicate with the internal network edge node through the Internet of Things (IoT), wherein the IoT may include 3G/4G/5G network, WiFi, LoRa network or NB-IoT network, etc. The internal network edge node may communicate with the edge computing platform through HTTP/HTTPS network, wherein the HTTP/HTTPS network may include wired network and wireless network.

Optionally, the data analysis results may be provided to different internal devices for multi-faceted intelligent management. Correspondingly, the above preset result receiving device may be a machine device, a data center device, or an operation management device.

In implementation, different result receiving devices may be preset for different data analysis results. After the result receiving device receives the corresponding data analysis result, intelligent management in different scenarios may be implemented. Specifically, the result receiving device may be a machine device. After the machine device receives the data analysis result, it may automatically arrange the operation instructions according to the data analysis result, so as to implement the autonomous intelligent optimization of the machine device. Of course, the result receiving device may also be a data center device. After receiving the data analysis result, the data center device may store, manage and update local data based on the data analysis result, so as to implement the autonomous intelligent optimization of the data center device. In addition, the result receiving device may also be an operation management device (such as a mobile phone terminal). After receiving the data analysis result, the operation management device may provide intelligent analysis and decision support for status of the internal operation based on the data analysis result, so as to implement the autonomous intelligent optimization of the internal operation.

Optionally, the edge computing software or device can support data conversion under multiple protocols. Correspondingly, after Step 201, there may be the following processing: the edge computing software or device may convert original data under different protocols into original data under a designated protocol based on a preset protocol conversion rule.

In implementation, data resolution functions under multiple protocols and protocol conversion rules of different data may be pre-configured in the edge computing software or device. Thus, after obtaining the original data of the machine device, the edge computing software or device may resolve the above original data based on the data resolution function under the corresponding protocol, and then may convert the original data under different protocols into the original data under the designated protocol based on the protocol conversion rule. In this way, through the processing of the edge computing software or device, data can be interworked between a new machine device and an old machine device, such that the traditional industrial device can be seamlessly and efficiently connected to the edge computing platform. It could be understood that if it is required to feed back the data processing result to the machine device subsequently, the edge computing software or device may also perform protocol conversion on the data processing result to convert the data processing result into contents under a protocol supported by the machine device.

Optionally, the edge computing platform may feed back the data processing result to the machine device through an operation technology (OT) layer. Correspondingly, Step 203 may include: the edge computing software or device feeds back an in-depth processing result to the machine device through an OT system by means of control instructions.

In implementation, after generating the in-depth processing result based on the original data, the edge computing platform may transmit the in-depth processing result to the edge computing software or device. After receiving the in-depth processing result, the edge computing software or device may feed back the in-depth processing result to the underlying machine device through the OT system by means of control instructions, such that the machine device can dynamically adjust an operating logic based on the in-depth processing result and generate optimized original data.

Optionally, data of the OT system may be processed by the edge computing platform to implement the intelligent management of the OT system. The corresponding processing may be as follows. The edge computing software or device obtains system operation data of the OT system, and uploads the system operation data to the edge computing platform, such that the edge computing platform creates and trains an OT system decision model based on the system operation data. The edge computing software or device receives the OT system decision model fed back by the edge computing platform, and performs intelligent management on the OT system based on the OT system decision model.

In implementation, the edge computing software or device may also obtain the system operation data of the OT system while obtaining the original data of the machine device, and then may upload the system operation data to the edge computing platform. In this way, after receiving the system operation data, the edge computing platform may store and sort the system operation data. Then, the edge computing platform may construct an OT system decision model based on the system operation data, and continuously train the OT system decision model based on the system operation data. Further, the edge computing platform may feed back the trained OT system decision model to the edge computing software or device, such that the edge computing software or device can apply the OT system decision model into the OT system to implement the intelligent management of the OT system.

In an embodiment of the present disclosure, the local computing software for edge computing obtains the original data of the machine device. Based on the edge computing container, framework and model running at a local machine device side, the local computing software for computing generates a mathematical model and a data analysis result according to the original data generated by the machine device through analyses, studies and uses with industry applications. In one aspect, by running the preset mathematical model or strategy, the local computing software for edge computing transmits, receives and feeds back a data analysis result generated by the machine device, and in another aspect, the local computing software for edge computing interacts the edge computing platform with data information related with the mathematical model or strategy and data information required for a newly constructed mathematical model, such that the result receiving device implements intelligent management based on the data analysis result. The edge computing software or device is deployed near the underlying machine device, such that in one aspect, the data analysis and processing may be closer to the data source, data can be processed more rapidly, delay time of data analysis and processing can be shortened, and a complete intelligent management system can be constructed directly in an internal network without connecting to an external network, and in another aspect, after being processed by the edge computing software or device, the amount of data required to be uploaded to the edge computing platform is greatly reduced, and thus bandwidth resources for data transmission are saved. Meanwhile, data are processed jointly by the edge computing software or device and the edge computing platform, which may fully utilize edge storage resources and computing resources, reduce data computing pressure and data storage pressure for the edge computing platform. Furthermore, data with security requirements are directly processed by the internal network without being transmitted to the external network, which may improve data security.

Based on the same technical idea, an embodiment of the present disclosure also provides an intelligent management system based on edge computing. The intelligent management system at least includes a machine device and an edge computing software or device connected to the machine device, wherein the edge computing software or device is configured to:
obtain original data of the machine device;
analyze the original data based on a locally running mathematical model, strategy and application to generate a data analysis result; and
feed back the data analysis result to a preset result receiving device, such that the result receiving device implements intelligent management based on the data analysis result.

Optionally, the edge computing software or device is also configured to:
perform data cleaning on the original data and perform data aggregation and compression on the cleaned original data;
upload the compressed original data to an edge computing platform, such that the edge computing platform creates and trains the mathematical model, strategy and application based on operation data; and
receive and store the mathematical model or strategy fed back by the edge computing platform.

Optionally, the intelligent management system also includes an internal network edge node deployed in an internal computer room.

The internal network edge node is configured to:
obtain the original data uploaded by the edge computing software or device;
internally process the original data to generate an internal processing result; and
feed back the internal processing result to a preset result receiving device.

Optionally, the preset result receiving device is a machine device, a data center device, or an operation management device.

Optionally, the feeding back, by the edge computing software or device, the data analysis result to the preset result receiving device includes:
feeding back, by the edge computing software or device, the data analysis result to the machine device through an operation technology (OT) system by means of control instructions.

Optionally, the edge computing software or device is also configured to:
convert original data under different protocols into original data under a designated protocol based on a preset protocol conversion rule.

Optionally, the edge computing software or device is also configured to:
obtain system operation data of an OT system and upload the system operation data to an edge computing platform, such that the edge computing platform creates and trains an OT system decision model based on the system operation data; and
receive the OT system decision model fed back by the edge computing platform, and perform intelligent management on the OT system based on the OT system decision model.

In an embodiment of the present disclosure, the edge computing software or device is deployed near the underlying machine device, such that in one aspect, data analysis and processing may be closer to a data source, and thus data can be processed more quickly, delay time of data analysis and processing can be shortened, and a complete intelligent management system can be constructed directly in an internal network without connecting to an external network, and in another aspect, after being processed by the edge computing software or device, the amount of data required to be uploaded to the edge computing platform is greatly reduced, and thus bandwidth resources for data transmission are saved. Meanwhile, data are processed jointly by the edge computing software or device and the edge computing platform, which can fully utilize edge storage resources and computing resources, and thus reduce data computing pressure and data storage pressure on the edge computing platform. Furthermore, data with security requirements are directly processed by the internal network without being transmitted to the external network, which can improve data security.

It should be understood for those skilled in the art that all or part of steps in the above embodiments may be completed by hardware, or by a related hardware instructed by a program. The program may be stored in a computer readable medium, and the storage medium described as above may be a read-only memory, a magnetic disc, an optical disc or the like.

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. An intelligent management method based on edge computing, the method is applied to an internal network management system and the internal network management system at least comprises a machine device and an edge computing software or device communicating with the machine device, wherein the method comprises:
obtaining, by the edge computing software or device, original data of the machine device;
analyzing, by the edge computing software or device, the original data based on a locally stored mathematical model or strategy to generate a data analysis result; and
feeding back, by the edge computing software or device, the data analysis result to a preset result receiving device, such that the result receiving device implements intelligent management based on the data analysis result.

2. The method according to claim 1, further comprising:
performing, by the edge computing software or device, data cleaning on the original data, and performing data aggregation and compression on the cleaned original data;
uploading, by the edge computing software or device, the compressed original data to an edge computing platform, such that the edge computing platform creates and trains the mathematical model or strategy based on operation data; and
receiving and storing, by the edge computing software or device, the mathematical model or strategy fed back by the edge computing platform.

3. The method according to claim 1, wherein the internal network management system further comprises an internal network edge node deployed in an internal computer room;
wherein the method further comprises:
obtaining, by the internal network edge node, the original data uploaded by the edge computing software or device;
processing, by the internal network edge node internally, the original data to generate an internal processing result; and
feeding back, by the internal network edge node, the internal processing result to the preset result receiving device.

4. The method according to any one of claims 1 to 3, wherein the preset result receiving device is a machine device, a data center device, or an operation management device.

5. The method according to claim 4, wherein the feeding back, by the edge computing software or device, the data analysis result to the preset result receiving device comprises:
feeding back, by the edge computing software or device, the data analysis result to the machine device through an operation technology (OT) system by means of control instructions.

6. The method according to claim 1, wherein after obtaining, by the edge computing software or device, original data of the machine device, the method further comprises:
converting, by the edge computing software or device, original data under different protocols into original data under a designated protocol based on a preset protocol conversion rule.

7. The method according to claim 1, further comprising:
obtaining, by the edge computing software or device, system operation data of an OT system and uploading the system operation data to an edge computing platform, such that the edge computing platform creates and trains an OT system decision model based on the system operation data; and
receiving, by the edge computing software or device, the OT system decision model fed back by the edge computing platform, and performing intelligent management on the OT system based on the OT system decision model.

8. An intelligent management system based on edge computing, at least comprising a machine device and an edge computing software or device communicating with the machine device, wherein the edge computing software or device is configured to:
obtain original data of the machine device;
analyze the original data based on a locally stored mathematical model or strategy to generate a data analysis result; and
feed back the data analysis result to a preset result receiving device, such that the result receiving device implements intelligent management based on the data analysis result.

9. The system according to claim 8, wherein the edge computing software or device is further configured to:
perform data cleaning on the original data and perform data aggregation and compression on the cleaned original data;
upload the compressed original data to an edge computing platform, such that the edge computing platform creates and trains the mathematical model or strategy based on operation data; and
receive and store the mathematical model or strategy fed back by the edge computing platform.

10. The system according to claim 8, wherein the intelligent management system further comprises an internal network edge node deployed in an internal computer room;
wherein the internal network edge node is configured to:
obtain the original data uploaded by the edge computing software or device;
internally process the original data to generate an internal processing result; and
feed back the internal processing result to the preset result receiving device.

11. The system according to any one of claims 8 to 10, wherein the preset result receiving device is a machine device, a data center device, or an operation management device.

12. The system according to claim 11, wherein feeding back, by the edge computing software or device, the data analysis result to the preset result receiving device comprises:
feeding back, by the edge computing software or device, the data analysis result to the machine device through an operation technology (OT) system by means of control instructions.

13. The system according to claim 8, wherein the edge computing software or device is further configured to:
convert original data under different protocols into original data under a designated protocol based on a preset protocol conversion rule.

14. The system according to claim 8, wherein the edge computing software or device is further configured to:
obtain system operation data of an OT system and upload the system operation data to an edge computing platform, such that the edge computing platform creates and trains an OT system decision model based on the system operation data; and
receive the OT system decision model fed back by the edge computing platform, and perform intelligent management on the OT system based on the OT system decision model.
